(19) Europäisches Patentamt
European Patent Office
Office européen des brevets

(11) EP 1 176 169 A1

(12) EUROPEAN PATENT APPLICATION

(43) Date of publication:
30.01.2002 Bulletin 2002/05

(21) Application number: 01117345.7

(22) Date of filing: 18.07.2001

(51) Int Cl.[7]: C08L 23/10, C08L 23/16
// (C08L23/10, 23:16),
(C08L23/16, 23:10)

(84) Designated Contracting States:
AT BE CH CY DE DK ES FI FR GB GR IE IT LI LU MC NL PT SE TR
Designated Extension States:
AL LT LV MK RO SI

(30) Priority: 27.07.2000 EP 00202691

(71) Applicant: Basell Technology Company B.V.
2132 MS Hoofddorp (NL)

(72) Inventors:
- Silvestri, Rosanna
36015 Schio (IT)
- News, Jean
44100 Ferrara (IT)

(74) Representative: Gaverini, Gaetano et al
Basell Poliolefine Italia S.p.A. Intellectual Property Via Pergolesi 25
20124 Milano (IT)

Remarks:
A request for correction of the description has been filed pursuant to Rule 88 EPC. A decision on the request will be taken during the proceedings before the Examining Division (Guidelines for Examination in the EPO, A-V, 3.).

# (54) Transparent elastomeric thermoplastic polyolefin compositions

(57) An elastomeric thermoplastic polyolefin composition comprising (I) a crystalline propylene polymer containing at least 80% by weight of a fraction insoluble in xylene at room temperature, the intrinsic viscosity being higher than 0.5 dL/g; (II) an atactic or amorphous propylene polymer having intrinsic viscosity higher than 0.5 dL/g; and (III) an elastomeric olefin polymer consisting of copolymers of ethylene with a comonomer selected from a $C_3$-$C_8$ $\alpha$-olefin, the intrinsic viscosity ranging from 1 to 4 dL/g. In said polyolefin composition the density of the elastomeric olefin polymer ($d_{eOP}$) satisfies the following relation:

$$d_{eOP}\pm0.005=\{d_{cPP}\times[w_{cPP}/(w_{cPP}+w_{aPP})]\}+\{d_{aPP}\times[w_{aPP}/(w_{cPP}+w_{aPP})]\} \quad (1)$$

wherein $w_{cPP}$ and $w_{aPP}$ are the weight percentage content of components (I) and (II) respectively and $d_{cPP}$ and $d_{aPP}$ are the density at room temperature of components (I) and (II) respectively.

EP 1 176 169 A1

## Description

The present invention relates to an elastomeric thermoplastic polyolefin composition and a process for producing the composition and articles obtainable therefrom.

The compositions of the present invention can be used in many application fields, especially those where soft, transparent and impact resistant materials are required.

Compositions suitable for being employed in the same field as the present composition due to the similar mechanical, optical and tactile properties are already known. An example of said compositions is the soft polyvinyl chloride. However, the polyvinyl chloride suffers from a number of disadvantages. The migration and extractability of plasticizers, discoloration and difficulty in treating its wastes are examples of said disadvantages. Hence, due to said shortcomings it is highly desirable to replace the polyvinyl chloride. In particular the migration and extractability of plasticizers in biologic liquids are unwelcome when the polyvinyl chloride is used in certain application sectors such as medical and food field.

Hence, the need of materials substitutive of PVC in the said fields is highly felt.

Suitable known olefin-based compositions are made of polyethylene or thermoplastic elastomeric olefin polymers. Examples of the latter compositions are described in European patent application 666284. Said European patent application discloses a blend of an amorphous polypropylene with a crystalline propylene polymer or an olefin-based thermoplastic elastomer composition. These compositions are endowed with good transparency and high softness. However, they have not good resistance to high temperatures such as the temperatures of steam sterilisation.

It has now been found a new polyolefin composition that does not have the above-mentioned shortcomings and has a good balance of softness, transparency, impact resistance at low temperatures and resistance to heat. Thanks to the resistance at high temperatures, the composition can be sterilised in autoclave.

The good impact resistance at low temperatures (i.e., -20 °C) of the compositions according to the present invention is achieved without affecting the transparency and the heat resistance of the composition.

Moreover, a further advantage of the compositions of the present invention is the resistance to blooming. Blooming can be a severe problem in soft polymeric compositions because it causes surface stickiness.

Accordingly, the present invention provides an elastomeric thermoplastic polyolefin composition comprising:

(I) a crystalline propylene polymer (cPP) containing at least 80% by weight, preferably 94% by weight, of a fraction insoluble in xylene at room temperature, the intrinsic viscosity being higher than 0.5 dL/g;
(II) an atactic or amorphous propylene polymer (aPP) having intrinsic viscosity higher than 0.5 dL/g; and
(III) an elastomeric olefin polymer (eOP) consisting of copolymers of ethylene with a comonomer selected from a $C_3$-$C_8$ $\alpha$-olefin, the intrinsic viscosity ranging from 1 to 4 dL/g;

in said polyolefin composition the density of the elastomeric olefin polymer ($d_{eOP}$) satisfies the following relation:

$$d_{eOP} \pm 0.005 = \{d_{cPP} \times [w_{cPP}/(w_{cPP} + w_{aPP})]\} + \{d_{aPP} \times [w_{aPP}/(w_{cPP} + w_{aPP})]\} \quad (1)$$

wherein $w_{cPP}$ and $w_{aPP}$ are the weight percentage content of components (I) and (II) respectively and $d_{cPP}$ and $d_{aPP}$ are the density at room temperature of components (I) and (II) respectively.

For room temperature, a temperature of about 23 °C is meant.

The polyolefin composition of the present invention may contain the above three components, i.e., cPP, aPP and eOP, in any amount, provided that the above relation between the density is satisfied. However, particularly suitable compositions according to the present invention comprise 5-55 wt.%, preferably 5-less than 40 wt.%, such as 39 wt.%, of cPP, 1-55 wt.% of aPP and 1-55 wt.% of eOP, based on the total amount (100 wt.%) of components (I) to (III).

The crystalline propylene polymer (cPP) can be selected from both syndiotactic and isotactic polymers. They comprise both a propylene homopolymer and a random copolymer of propylene with recurring units deriving from ethylene and/or 1-butene. The comonmer ranges preferably from 0.5 to 20% by moles.

Generally, the intrinsic viscosity of an isotactic propylene polymer ranges from 0.6 to 6 dL/g. Those polymers having intrinsic viscosity higher than 1 dL/g, preferably higher than 1.5 dL/g, are the most suitable components for the composition of the present invention

The melting temperature of an isotactic propylene polymer is generally between 110 and 160 °C, and can even reach values above 160 °C.

Particularly suitable for the composition of this invention are isotactic propylene polymers having melting enthalpy greater than 80 J/g, preferably greater than 90 J/g.

The fraction soluble in xylene at 23 °C of these polymers is generally less than 10%.

The molecular weight distribution of these polymers $M_w/M_n$ is generally broad, i.e., larger than 5.

Suitable isotactic propylene polymers are commercial available isotactic polypropylene, for example, which are produced by polymerising the relevant monomer(s) according to the known processes in the presence of conventional titanium or vanadium based heterogeneous Ziegler-Natta-type catalysts.

Metallocene-based isotactic propylene polymers having the above-described characteristics can also be used. Polymers made by means of metallocenes generally have narrow molecular weight distribution $M_w/M_n$, such as values of lower than 4. Suitable propylene polymers are described, for example, in European patent applications 576970 and 629632. Said polymers can be prepared according to known methods by using a catalytic system comprising the racemic form of dimethylsilanediyl-bis[1-(2-ethyl-4-phenylindenyl)]zirconium dichloride, for example, as metallocene catalyst and an activating cocatalyst, such as alumoxane.

Generally, the intrinsic viscosity of syndiotactic propylene polymer ranges from 0.6 to 6 dL/g. Those polymers having intrinsic viscosity higher than 1.0 dL/g, preferably higher than 1.3 dL/g are the most preferred as components of the composition of the present invention.

The melting temperature of a syndiotactic propylene homopolymer is generally between 110 and 150 °C and the melting enthalpy is generally between 20 and 50 J/g. For the composition of the present invention those syndiotactic polymers having a melting enthalpy higher than 30 J/g, preferably higher than 40 J/g are the most suitable.

Suitable syndiotactic polymers and catalytic systems are, respectively, described in EP-A-697436 and USP 4892851. Said polymers can be prepared according to known methods by using a catalytic system comprising isopropylidene(cyclopentadienyl)(9-fluorenyl) zirconium dichloride, for example, as syndiospecific metallocene catalyst, and an activating cocatalyst.

The atactic or amorphous propylene polymer (aPP) is preferably a propylene homopolymer. However, it can also be a propylene copolymer with recurring units deriving from ethylene and/or 1-butene. The amount of comonomer ranges preferably from 0.5 to 13 mol%.

The aPP is substantially devoid of crystallinity. Its melting enthalpy is generally lower than about 20 J/g, preferably lower than 10 dL/g.

Preferably, the aPP suitable as a component for the composition of the present invention has intrinsic viscosity equal to or higher than 1.0 dL/g, and it can reach values higher than 3 dL/g, for example. The molecular weight distribution $M_w/M_n$ of aPP is lower than 5, preferably lower than 4, and more preferably lower than 3.

The structure of aPP determined by $^{13}$C-NMR analysis appears substantially atactic although the polymers have a varying content of isotactic and syndiotactic sequences.

Suitable aPP as well as the polymerisation process thereof is described in the international patent application WO 00/1738. Said aPP has generally isotactic sequences, in particular pentads, more numerous than syndiotactic. The percentage of the isotactic triads, %(mm), is typically in the range from 10 to 80. Those polymers with the shortest isotactic sequences show no detectable melting enthalpy. More particularly, the aPP has the following properties:

- the ratio of the pentads (mmmm)/(rrrr) being equal to or greater than 1.5, preferably equal to or greater than 2.0; and
- the ratio of the pentads (mmmm)/(mmmr) being equal to or greater than 0.8, preferably equal to or greater than 0.9, most preferably equal to or greater than 1.

Said aPP is the preferred component of the composition of the present invention when the cPP component is an isotactic propylene polymer.

According to said international patent application WO 00/01738, the aPP is polymerised in the presence of the raceme form of metallocene compounds having the following formula:

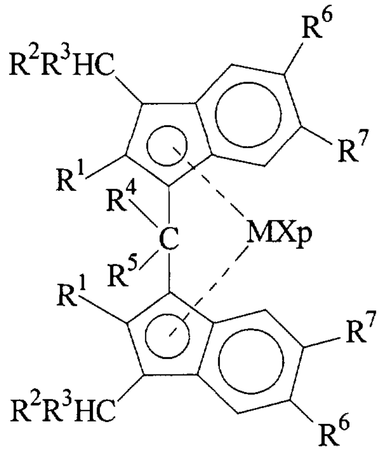

(I)

wherein substituents

$R^1$ are hydrogen atoms;
$R^2$ and $R^3$ are, independently from each other, $C_1$-$C_{20}$-alkyl, $C_3$-$C_{20}$-cycloalkyl, $C_2$-$C_{20}$-alkenyl, $C_6$-$C_{20}$-aryl, $C_7$-$C_{20}$-alkylaryl or $C_7$-$C_{20}$-arylalkyl radicals, optionally containing silicon or germanium atoms;
or where $R^2$ and $R^3$ can be joined together to form a 4 to 6 membered ring or a 6 to 20 fused ring system;
$R^4$ and $R^5$, same or different, are hydrogen atoms or $-CHR^8R^9$ groups;
$R^4$ and $R^5$ can form a ring having 3 to 8 carbon atoms, which can contain heteroatoms;
the $R^8$ and $R^9$ substituents, same or different, are hydrogen atoms, $C_1$-$C_{20}$-alkyl, $C_3$-$C_{20}$-cycloalkyl, $C_2$-$C_{20}$-alkenyl, $C_6$-$C_{20}$-aryl, $C_7$-$C_{20}$-alkylaryl or $C_7$-$C_{20}$-arylalkyl radicals, which can form a ring having 3 to 8 carbon atoms which can contain heteroatoms;
the $R^6$ and $R^7$ substituents, same or different, are hydrogen, $C_1$-$C_{20}$-alkyl, $C_3$-$C_{20}$-cycloalkyl, $C_2$-$C_{20}$-alkenyl, $C_6$-$C_{20}$-aryl, $C_7$-$C_{20}$-alkylaryl or $C_7$-$C_{20}$-arylalkyl radicals, optionally containing silicon or germanium atoms; and optionally two adjacent $R^6$ and $R^7$ substituents can form a ring comprising from 5 to 8 carbon atoms;
M is a transition metal selected from those belonging to group 3, 4, 5, 6 or to the lanthanide or actinide groups in the Periodic Table of the Elements (new IUPAC version);
X, same or different, is a monoanionic ligand, such as a hydrogen atom, a halogen atom, a $R^{10}$, $OR^{10}$, $OSO_2CF_3$, $OCOR^{10}$, $SR^{10}$, $NR^{10}_2$ or $PR^{10}_2$ group, wherein the substituents $R^{10}$ are a $C_1$-$C_{20}$-alkyl, $C_3$-$C_{20}$-cycloalkyl, $C_2$-$C_{20}$-alkenyl, $C_6$-$C_{20}$-aryl, $C_7$-$C_{20}$-alkylaryl or $C_7$-$C_{20}$-aryl-alkyl radical, optionally containing silicon or germanium atoms;
p is an integer from 0 to 3, p being equal to the oxidation state of the metal M minus two.

In the metallocene of formula (I) the transition metal M is preferably selected from titanium, zirconium and hafnium. More preferably, the transition metal M is zirconium.

The X substituents are preferably chlorine atoms or methyl groups.

The $R^6$ and $R^7$ substituents are preferably hydrogen atoms.

Suitable metallocene compounds of formula (I) are listed in the above-mentioned international patent application. Particularly suitable compounds are isopropylidene-bis[1-(3-isopropyl-indenyl)] zirconium dichloride and methylene-bis[1-(3-isopropyl-indenyl)] zirconium dichloride.

The preparation of the ligands for the metallocenes of formula (I) can be carried out by known methods. A particularly suitable methods for preparing the ligands for the metallocenes of formula (II) wherein $R^4$ and $R^5$ are hydrogen atoms are reported in WO 98/43931 and the above-mentioned international patent application.

Transparent blends of cPP and aPP described in said international patent application WO 00/1738 can be advantageously used as matrix in the composition according to the present invention. Both cPP and aPP have a quite high molecular weight. Thus, the intrinsic viscosity of the blend is generally higher than 0.5 dL/g, and can reach values higher than 3 dL/g. Said blends have the cPP/aPP weigh t ratio of 10:90 and 90:10. More preferably, the said ratio ranges between 30:70 and 70:30.

It is observed that certain suitable aPPs have syndiotactic diads (r) more numerous than the isotactic ones (m); the (r) content may surpass the (m) content of greater than 5%. Said aPPs are the preferred component of the composition of the present invention when the cPP component is a syndiotactic propylene polymer. Examples of the said polymers are those polymers having the Bernoullianity index of about 1±0.2, preferably comprised within the range

0.9-1.1. The Bernoullianity index (B) is defined as

$$B = 4[mm][mr]/[mr]^2.$$

The above aPPs are already known. They are described in European patent application 666284, for example. They can be obtained by polymerisation according to known method with metallocene catalyst of Zr, Ti and Hf. Examples of catalysts and of the process for preparing suitable aPPs are described in European patent application 604917. The metallocene compounds described therein have two fluorenyl rings joined through a bivalent radical, such as Si, Ge, C, N as ligand. Examples of bivalent radicals are dimethylsilandyl, methylene, and isopropylidene. In particular the described metallocene compounds have the following general formula:

(II)

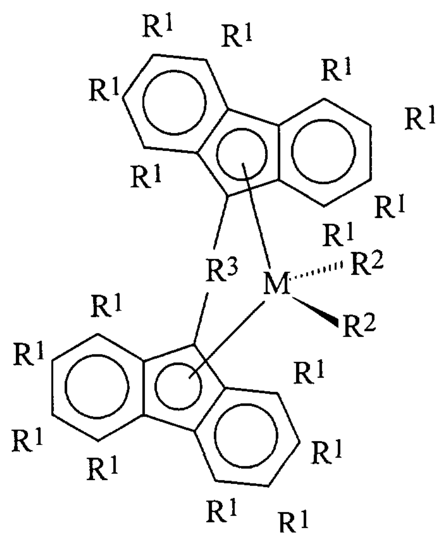

wherein

substituents $R^1$, the same or different from each other, are hydrogen atoms, $C_1$-$C_{20}$ alkyl radicals, $C_3$-$C_{20}$ cycloalkyl radicals, $C_2$-$C_{20}$ alkenyl radicals, $C_6$-$C_{20}$ aryl radicals, $C_7$-$C_{20}$ alkylaryl radicals, or $C_7$-$C_{20}$ arylalkyl radicals, optionally two adjacent substituents $R^1$ can form a cycle comprising from 5 to 8 carbon atoms and, furthermore, substituents $R^1$ can contain Si or Ge atoms;

M is Ti, Zr or Hf;

substituents $R^2$, the same or different from each other, are halogen atoms, -OH, -SH, $R^1$, $-OR^1$, $-SR^1$, $-NR^1_2$ or $PR^1_2$, wherein $R^1$ is defined as above;

the group $R^3$ is selected from $>CR^1_2$, $>SiR^1_2$, $>GeR^1_2$, $>NR^1$ or $>PR^1$, wherein $R^1$ is defined as above and optionally, when $R^3$ is $>CR^1_2$, $>SiR^1_2$ or $>GeR^1_2$, both substituents $R^1$ can form a cycle comprising from 3 to 8 atoms;

optionally as reaction product with an aluminium organometallic compound of formula $AlR^4_3$ or $Al_2R^4_6$, wherein substituents $R^4$, the same of different from each other, are $R^1$ or halogen.

A specific example of formula (II) is dimethylsilanediyl-bis(9-fluorenyl)zirconium dichloride.

The elastomeric olefin polymer (eOP) is preferably selected from copolymers of ethylene with at least 20% by weight, preferably from 20 to 80 wt.%, of a $C_3$-$C_8$ $\alpha$-olefin ($^{13}$C-NMR analysis, see the method below). The preferred $\alpha$-olefins are propylene, 1-butene and 1-octene. The eOP can optionally contain recurring units deriving from a diene. When present, the diene is in an amount of from 0.5 to 10% by weight. with respect to the whole eOP.

Generally, the eOP has, preferably, a value of glass temperature lower than -10 °C.

The eOP can be prepared by using known metallocene catalysts. Preferred examples of the said elastomeric olefin polymers are commercial elastomeric copolymers of ethylene with 1-butene or 1-octene having from 20 to 40 wt% of comonomer ($^{13}$C-NMR analysis).

A specific example of said ethylene/1-octene copolymer is the Engage® 8180 copolymer containing 66 wt.% of ethylene and 34 wt.% of 1-octene ($^{13}$C-NMR analysis), having a density of 0.865 g/mL according to method ASTM D 792.

Another specific example of said ethylene/1-octene copolymer is the Engage® 8150 copolymer containing

68 wt.% of ethylene and 32 wt.% of 1-octene ($^{13}C$-NMR analysis), having a density of 0.871 g/mL according to method ASTM D 792.

A specific example of said ethylene/1-butene copolymer is the Exact® 4033 copolymer containing 79 wt.% of ethylene and 21 wt.% of 1-butene ($^{13}C$-NMR analysis), having a density of 0.881 g/mL according to method ASTM D 792.

Another specific example of said ethylene/1-butene copolymer is the Exact® 4049 copolymer containing 75 wt.% of ethylene and 25 wt.% of 1-butene ($^{13}C$-NMR analysis), having a density of 0.875 g/mL according to method ASTM D 792.

The eOP can be also synthesised by Ziegler-Natta catalysts using Ti or V catalysts, for example. The ethylene content is preferably less than 40% by weight, 20-38 wt% for example. The molecular weight distribution $M_w/M_n$ of these polymers can range from 2 to 10, and it can be even higher than 10.

The Ziegler-Natta catalysts used in the process for preparing the above crystalline and non-crystalline polymers are obtained by contacting:

(a) a solid catalyst component comprising a titanium compound having at least one titanium-halogen bond, and an electron-donor compound, both supported on a magnesium halide in active form;
(b) an Al-alkyl compound; and, optionally,
(c) an external electron-donor compound.

Solid catalyst component (a) is well known in patent literature. Particularly advantageous are the catalysts described in US patent 4,399,054 and European patent applications 45977 and 395083.

In general, the solid catalyst components used in said catalyst comprise, as electron-donor compounds, compounds selected from the ethers, ketones, lactones, compounds containing N, P and/or S atoms and esters of mono- and dicarboxylic acids. Particularly suitable electron-donor compounds are phthalic acid esters, such as diisobutyl, dioctyl, diphenyl and benzylbutyl phthalate.

Other electron-donors particularly suitable are 1,3-diethers of formula:

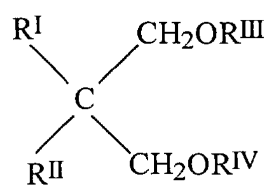

wherein $R^I$ and $R^{II}$ are the same or different and are $C_1$-$C_{18}$ alkyl, $C_3$-$C_{18}$ cycloalkyl or $C_7$-$C_{18}$ aryl radicals; $R^{III}$ and $R^{IV}$ are the same or different and are $C_1$-$C_4$ alkyl radicals; or are the 1,3-diethers in which the carbon atom in position 2 belongs to a cyclic or polycyclic structure made up of 5, 6 or 7 carbon atoms and containing two or three unsaturations.

Ethers of this type are described in published European patent applications 361493 and 728769. Representative examples of said dieters are 2-methyl-2-isopropyl-1,3-dimethoxypropane, 2,2-diisobutyl-1,3-dimethoxypropane, 2-isopropyl-2-cyclopentyl-1,3-dimethoxypropane, 2-isopropyl-2-isoamyl-1,3-dimethoxypropane and 9,9-bis (methoxymethyl)fluorene.

The aPP is prepared by polymerisation of alpha-olefins, particularly of propylene, in the presence of a catalyst comprising the product obtainable by contacting a metallocene compound with a cocatalyst.

All the above polymerisation processes wherein the catalyst is a metallocene compound are carried out in the presence of an activating co-catalyst as well

Suitable activating cocatalysts are alumoxanes or compounds capable of forming an alkyl metallocene cation.

Alumoxane useful as cocatalyst may be linear alumoxanes of formula (II):

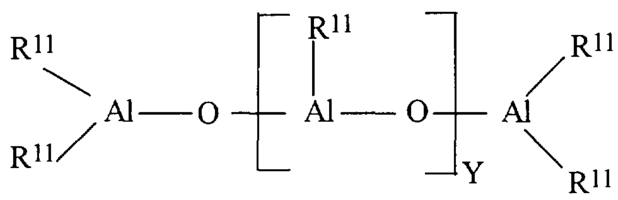

wherein $R^{11}$ is selected from the group consisting of halogen, linear or branched, saturated or unsaturated $C_1$-$C_{20}$ alkyl, $C_3$-$C_{20}$ cycloalkyl, $C_6$-$C_{20}$ aryl, $C_7$-$C_{20}$ alkylaryl and $C_7$-$C_{20}$ arylalkyl radicals and y ranges from 0 to 40; or cyclic alumoxanes of the formula (III):

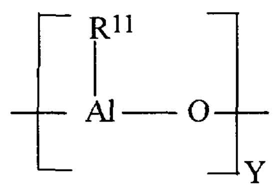

wherein $R^{11}$ has the meaning herein described and y is an integer ranging from 2 to 40.

The above alumoxanes may be obtained according to procedures known in the state of the art, by reacting water with an organo-aluminium compound of formula $AlR^{11}_3$ or $Al_2R^{11}_6$, with the condition that at least one $R^{11}$ is not halogen. In this case, the molar ratios of Al/water in the reaction are comprised between 1:1 and 100:1. Particularly suitable are the organometallic aluminium compounds of formula (II) described in EP 575875 and those of formula (II) described in WO 96/02580. Moreover, suitable cocatalysts are those described in WO 99/21899 and in the European patent app. 99203110.4.

The molar ratio between aluminium and the metal of the metallocene compound is comprised between about 10:1 and about 5000:1, and preferably between about 100:1 and about 4000:1.

Examples of alumoxanes suitable as activating cocatalysts in the process of the invention are methylalumoxane (MAO), tetra-isobutyl-alumoxane (TIBAO), tetra-2,4,4-trimethylpentylalumoxane (TIOAO) and tetra-2-methylpentylalumoxane. Mixtures of different alumoxanes can also be used.

Not limiting examples of aluminium compounds of formula $AlR^{11}_3$ or $Al_2R^{11}_6$ are:

tris(methyl)aluminium, tris(isobutyl)aluminium,
tris(isooctyl)aluminium, bis(isobutyl)aluminium hydride,
methyl-bis(isobutyl)aluminium, dimethyl(isobutyl)aluminium,
tris(isohexyl)aluminium, tris(benzyl)aluminium,
tris(tolyl)aluminium, tris(2,4,4-trimethylpentyl)aluminium,
bis(2,4,4-trimethylpentyl)aluminium hydride, isobutyl-bis(2-phenyl-propyl)aluminium,
diisobutyl-(2-phenyl-propyl)aluminium, isobutyl-bis(2,4,4-trimethyl-pentyl)aluminium,
diisobutyl-(2,4,4-trimethyl-pentyl)aluminium, tris(2,3-dimethyl-hexyl)aluminium,
tris(2,3,3-trimethyl-butyl)aluminium, tris(2,3-dimethyl-butyl)aluminium,
tris(2,3-dimethyl-pentyl)aluminium, tris(2-methyl-3-ethyl-pentyl)aluminium,
tris(2-ethyl-3-methyl-butyl)aluminium, tris(2-ethyl-3-methyl-pentyl)aluminium,
tris(2-isopropyl-3 -methyl-butyl)aluminium and tris(2,4-dimethyl-heptyl)aluminium.

Particularly preferred aluminium compounds are trimethylaluminium (TMA), tris(2,4,4-trimethylpentyl) aluminium (TIOA), triisobutylaluminium (TIBA), tris(2,3,3-trimethyl-butyl)aluminium and tris(2,3-dimethyl-butyl)aluminium.

Mixtures of different organometallic aluminium compounds and/or alumoxanes can also be used.

In the catalyst system used in the process of the invention, both said titanium complex and said alumoxane can be pre-reacted with an organometallic aluminium compound of formula $AlR^{11}_3$ or $Al_2R^{11}_6$, wherein $R^{11}$ has the meaning reported above.

Further suitable activating cocatalysts are those compounds capable of forming an alkylmetallocene cation. Preferably, the said compounds have formula $Y^+Z^-$, wherein $Y^+$ is a Brønsted acid capable of donating a proton and of reacting irreversibly with a substituent X of the compound of formula (I), and $Z^-$ is a compatible non-coordinating

anion, capable of stabilizing the active catalytic species which result from the reaction of the two compounds, and which is sufficiently labile to be displaceable by an olefinic substrate. Preferably, the $Z^-$ anion comprises one or more boron atoms. More preferably, the anion $Z^-$ is an anion of formula $BAr_4^{(-)}$, wherein the Ar substituents, the same or different from each other, are aryl radicals such as phenyl, pentafluorophenyl, bis(trifluoromethyl)phenyl. Tetrakis-pentafluorophenyl-borate is particularly preferred. Moreover, compounds of formula $BAr_3$ can be conveniently used.

The catalysts of the present invention can also be used on an inert support, by depositing the metallocene, or the reaction product of the metallocene with the cocatalyst, or the cocatalyst and successively the metallocene, on the inert support, such as silica, alumina, magnesium halides, olefin polymers or prepolymers (i.e. polyethylenes, polypropylenes or styrene-divinylbenzene copolymers). The thus obtained supported catalyst system, optionally in the presence of alkylaluminium compounds, either untreated or pre-reacted with water, can be usefully employed in gas-phase polymerization processes. The solid compound so obtained, in combination with further addition of the alkyl aluminium compound as such or prereacted with water, is usefully employed in gas phase polymerisation.

The composition of the present invention can also contain various additives generally used in the polymer compositions. Examples are reinforcing agents and fillers, such as heat stabilisers, antioxidants, light stabilisers, antistatic agents, lubricants, nucleating agents, flame retardants, pigments or dyes, glass fibres, carbon fibres, calcium carbonate, calcium sulfate, barium sulfate, magnesium hydroxide, mica, talc, or clay.

The components of the composition of the present invention can be prepared in one or more stage(s).

The preparation of the present composition comprising the components is not critical and can be carried out by methods commonly used in the preparation of conventional polypropylene compositions. The composition may be prepared by blending the polymers in the molten state in an apparatus equipped with mixing elements, such as an internal mixer or extruder. For example one can use a Banbury mixer or a single-screw extruder or a twinscrew type extruder. The order of mixing of the components is not relevant.

An alternative method for preparing the present composition is directly by sequential polymerising of the monomers in two or more stages.

An example of a two-stages process is as follows:

- the matrix, i.e. the blend of components (I) and (II), is prepared by synthesising components (I) and (II) in one stage as reported in the international patent application W0 96/23838. According to WO 96/23838, the intimate blends are produced by simultaneously polymerising propylene and, optionally, the co-monomers with two or more cyclopentadienyl transition metal compounds selected to produce the desired molecular weights and crystalline or amorphous characters. Preferably, the cyclopentadienyl transition metal compounds are used at the same time and combined with the same non-coordinating anion activator or alumoxane;
- the second stage consists of synthesising component (III). An example of such a type of polymerisation process is reported in WO 96/112118.

The melt index of the composition of the present invention generally ranges from 0.1 g/10 min to 30 g/10 min.

The compositions of the invention are generally obtained in form of pellets. These can be transformed into shaped articles, such as containers for food and drinking water and other liquids, medical articles, such as bags or tubes, and heating equipment., by known processes, such as injection, co-injection moulding, extrusion and blow moulding processes. They can also be obtained as sheets and films, for food packaging for example, by known processes, such as extrusion and film casting or film blowing.

The following examples are given to illustrate but not limit the present invention.

The method used to obtain the property data reported in the examples and description are identified below.

- Xylene-soluble fraction: a solution of the sample in xylene at a concentration of 1% by weight is prepared and kept at 135 °C for one hour while stirring. The solution is allowed to cool to 95 °C, while stirring, after which it is kept for 20 minutes without stirring, and for 10 minutes under stirring. The solution is then filtered, and acetone is added to an aliquot of the filtrate to cause the polymer dissolved therein to precipitate. The polymer thus obtained is recovered, washed, dried, and weighed to determine the weight of xylene soluble fraction.
- Melt Index "L" (MIL): according to the ASTM D 1238, condition L;
- $^{13}C$-NMR analysis of the polymers is carried out on a Bruker DPX 400 spectrometer operating at 400.13 MHz. The samples are analysed as solutions in tetrachlorodideuteroethane at 120 °C.
- Differential Scanning Calorimetry (DSC) analysisis is carried out on a DSC-7 instrument from Perkin Elmer Co. Ltd. According to the following procedure. About 10 mg of sample are heated from 40 to 200 °C at a rate of 20°C /minute; the sample is held for 5 minutes at 200 °C and then cooled to 40 °C at the same rate. A second heating scan is then carried out using the same procedure as the first one. The melting temperatures $T_m$ and melting entalphy $\Delta H_m$ here reported are second scan values.
- Weight-average molecular weight ($M_w$) and numeric-average molecular weight ($M_n$): Gel Permeation Chromatog-

raphy analysis carried out on an instrument WATERS 150 in orthodichlorobenzene at 135 °C.

- Intrinsic viscosity (I.V.): measured in tetraline at 135 °C.
- Density: according to the ASTM D 1505 method;
- Haze: according to the ASTM D 1003 method;
- Hardness Shore A/D: according to the ASTM D 2240 method;
- Izod impact resistance: according to the ASTM D 256 method.

Polymers used in the examples and comparative examples

- Isotactic propylene homopolymer (cPP1)

It has MI"L" = 0.7 dg/min, I.V.= 2.8 dL/g, $M_w/M_n$ = 7, density = 0.900 g/mL, $T_m$ =162 °C, $\Delta H_m$= 100 J/g; the fraction soluble in xylene at room temperature is 5 wt.%. It is obtained by polymerisation of propylene in the presence of a high yield and highly stereospecific Ziegler-Natta catalyst, supported on magnesium chloride.

- Isotactic propylene homopolymer (cPP2).

It has MI"L" = 23 g/10 min, I.V. = 1.35 dL/g, $M_w/M_n$ = 3, density = 0.900 g/mL, $T_m$=153 °C, $\Delta H_m$= 90 J/g; the fraction soluble in xylene at room temperature is 0.5 wt.%. It is obtained by polymerisation of propylene in the presence of the raceme form of dimethylsilanediyl-bis[1-(2-ethyl-4-phenyl-indenyl)]zirconium dichloride.
It is marketed by Montell Italia S.p.A as Moplen Q30P.

- Crystalline propylene copolymer EP2X30F (cPP3).

It is a copolymer of propylene with 3 wt. % (i.e. 4.4 mol%) ethylene having MI"L" = 9 dg/10 min, I.V. = 1.5 dL/g, $M_w/M_n$ = 7, density = 0.900 g/mL, $T_m$=144 °C, $\Delta H_m$ =80 J/g; the fraction soluble in xylene at room temperature is 7 wt. %. It is obtained by polymerisation of propylene in the presence of a high yield and highly stereospecific Ziegler-Natta catalyst, supported on magnesium chloride.

- Atactic propylene homopolymer (aPP1)

It has density = 0.850 g/mL, I.V. = 1.55 dL/g; DSC analysis shows no melting peak. $^{13}$C-NMR analysis gives the following distribution of triads and pentads:

| $^{13}$C-NMR | Triad distribution % | | | Pentad Distribution % | | | mmmm/rrrr | mmmm/mmmr |
|---|---|---|---|---|---|---|---|---|
| | mm | rm | rr | mmmm | mmmr | rrrr | | |
| aPP2 | 33.9 | 40.9 | 25.2 | 14.80 | 14.24 | 6.41 | 2.31 | 1.04 |

It is prepared by using the raceme form of isopropylidene-bis[1-(3-isopropylindenyl)]zirconium dichloride, rac-$Me_2C[1\text{-}(3\text{-}iPr\text{-}Ind)]_2ZrCl_2$, the synthesis of which is carried out as described in WO 96/22995.
The polymerisation of aPP 1 is carried out as follows: propylene is charged at room temperature in a 1-L jacketed stainless-steel autoclave, equipped with magnetically driven stirrer and a 35-mL stainless-steel vial, connected to a thermostat for temperature control, previously purified by washing with a TIBA solution in hexane and dried at 50 °C in a stream of propylene. $AliBu_3$ (1 mmol in hexane) is added as scavenger before the monomer. The autoclave is then thermostated at 2 °C below the polymerisation temperature. Then the toluene solution containing the catalyst/cocatalyst mixture is injected in the autoclave by means of nitrogen pressure through the stainless-steel vial, the temperature rapidly raised to the polymerisation temperature (45 °C) and the polymerisation carried out at constant temperature for 1 hour. 2 mg of rac-$Me_2C[1\text{-}(3\text{-}iPr\text{-}Ind)]_2ZrCl_2$ as catalyst are used. The Al/Zr molar ratio is 1000. After venting the unreacted monomer and cooling the reactor to room temperature, the polymer is dried under reduced pressure at 60 °C.

- Atactic propylene homopolymer (aPP2)

It has density = 0.850 g/mL and intrinsic viscosity of 1.67 dL/g; DSC analysis shows no melting peak. The (B) index is 0.99, %(r)-%(m) is 17.7. The weight average molecular weight is of about 250,000 and $M_w/M_n$ is 2.5.
It is obtained by polymerisation of propylene in the presence of dimethylsilanediyl-bis(9-fluorenyl)zirconium

dichloride, $Me_2Si(9\text{-}Flu)_2ZrCl_2$, the synthesis of which is carried out as described in EP-A-604917. The polymerisation process is equal to the one for producing aPP1.

- Polymer blend of isotactic propylene homopolymer and atactic propylene homopolymer (aPP/cPP in situ blend).

The blend has MI"L" = 1.92 g/10 min, I.V.=1.84 dL/g, density = 0.880 g/cc, $T_m$=149°C, $\Delta H_m$=55 J/g; the xylene insoluble fraction is 54.2 wt.% (I.V.= 1.71 dL/g), the xylene soluble fraction is 45.8 wt.% (I.V.= 2.37 dL/g).
It is prepared by using the raceme form of dimethylsilanediyl-bis[1-(2-methylindenyl)]zirconium dichloride, rac-$Me_2Si[1\text{-}(2\text{-}Me\text{-}Ind)]_2ZrCl_2$ (a catalyst commercialised by Boulder Scientific Company, USA, and described in EP-A-576970) and di-n-butyl-silanediyl-bis(9-fluorenyl)zirconium dichloride, $Bu_2Si(Flu)_2ZrCl_2$; the latter is synthesised as described in EP-A-604917.
Into a 350 mL glass reactor, equipped with thermometer, refluxing condenser, blade stirrer and thermoregulation system, 150 mL of toluene and 26.6 g (458.6 mmol) of MAO in powder are introduced under nitrogen atmosphere and thermostated at the temperature of 25 °C. 40 mL of a toluene solution containing 526.9 mg (1.105 mmol) of rac-$Me_2Si[1\text{-}(2\text{-}Me\text{-}Ind)]_2ZrCl_2$ are mixed to a 40 mL of a toluene solution containing 760.8 mg (1.202 mmol) of $Bu_2Si(Flu)_2ZrCl_2$.
The solution with the metallocenes is added to the reactor over 20 minutes and the red-brown mixture is kept stirred for 30 minutes. Slowly (20 minutes), 26.3 g of Grace 955/60w silica (dried at 800 °C) are added and the whole is kept stirred 30 minutes at 25 °C. After heating of the slurry to 70 °C, the solvent is evaporated under vacuum to obtain a free flowing powder.
A 100 L steel autoclave equipped with magnetic stirrer, pressure and temperature indicator, system for loading the catalyst, monomer feed line and thermosetting jacket, is purged through propylene washing at 70 °C during 2 hours. At 25 °C, 60 mmol of triethylaluminium (TEAL), as 10 wt.%/v hexane solution, and 60 L of liquid propylene are introduced into the reactor and the temperature is risen to 46 °C. The catalytic suspension is prepared in a glass round bottle by contacting 12.55 g of dry prepolymerised catalyst and 5 mmol of TEAL in 60 mL of dry hexane. The suspension is then siphoned in stainless steel vial and the catalyst introduced in the autoclave by a nitrogen overpressure. The temperature is risen to 50 °C and maintained constant during the polymerisation. After 25 minutes, a second catalytic suspension (13.8 g/5 mmol TEAL) is injected into the autoclave. After 90 minutes, the reactor was degassed and nitrogen is flown during a night, then 18.7 Kg of a blend of crystalline and an atactic PP is recovered.

- Poly(ethylene-*co*-1-butene)

It contains 25% by weight of units deriving from 1-butene ($^{13}C$-NMR analysis). The density is of 0.875 g/mL and the intrinsic viscosity is of 1.24 dL/g. It is commercialised by Exxon Chemical with the trademark Exact® 4049.

- Poly(ethylene-*co*-1-butene)

It contains 21% by weight of units deriving from 1-butene ($^{13}C$-NMR analysis). The density is of 0.881 g/mL and the intrinsic viscosity is of 1.79 dL/g. It is commercialised by Exxon Chemical with the trademark Exact® 4033.

- Poly(ethylene-*co*-1-octene)

It contains 32% by weight of units deriving from 1-octene (IR analysis according to Dow Chemical. The density is of 0.871 g/mL and the intrinsic viscosity is of 1.74 dL/g. It is marketed by Dow Chemical with the trademark Engage® 8150.

- Poly(ethylene-*co*-1-octene)

It contains 33% by weight of units deriving from 1-octene ($^{13}C$-NMR analysis). The density is of 0.865 g/mL and the intrinsic viscosity is of 1.79 dL/g. It is marketed by Dow Chemical with the trademark Engage® 8180.

<u>Examples 1-9 and comparative examples 1c-6c</u>

The polymers listed in Tables 1-4 are blended all together in a Banbury at 200 °C for 10 min at 50 rpm. 0.2 wt% of Irganox® B215 (pentaerithryl-tetrakis[3(3,5-di-tert-butyl-4-hydroxyphenyl] propionate and tris(2,4-ditert-butylphenyl) phosphite in the ratio of 1:1) has been added previously to each of these blends.
Tables 1-4 show the amounts of polymers (percentages by weight) blended as well as the properties.
The blend obtained thereof is compression moulded into plaques of 1mm thickness at 200 °C for 5 min and

subsequently cooled in a water-cooled press. Haze and Shore D hardness were measured on these plaques and are reported in tables 1-4.

Izod impact resistance was measured on plaques 3 mm thick of the same blends, moulded at 200 °C for 5 min. and cooled to room temperature at a rate of 15 °C/min.

Table 1

| Examples and comparative examples | 1 | 1c | 2c |
|---|---|---|---|
| cPP1 (Moplen Q30P)(wt %) | 33 | 100 | 50 |
| aPP1 (wt %) | 33 | 0 | 50 |
| Exact 4049 (wt%) | 34 | 0 | 0 |
| Haze (%) | 42 | 80 | 61 |
| Hardness Shore D (points) | 34 | 69 | 39 |
| Izod impact resistance at -20 °C (J/m) | 100 | <20 | <20 |

Table 2

| Example and comparative examples | 2 | 3c | 4c |
|---|---|---|---|
| cPP2 (wt%) | 33 | 100 | 50 |
| aPP2 (wt%) | 33 | 0 | 50 |
| Exact 4049 (wt%) | 34 | 0 | 0 |
| Haze (%) | 47 | 80 | 59 |
| Hardness Shore D (points) | 32 | 68 | 39 |
| Izod impact resistance at -20 °C (J/m) | 100 | <20 | <20 |

Table 3

| Examples and comparative example | 3 | 4 | 5c |
|---|---|---|---|
| aPP/cPP in situ blend (wt%) | 70 | 70 | 100 |
| Exact 4033 (wt%) | 30 | 0 | 0 |
| Exact 4049 (wt%) | 0 | 30 | 0 |
| Haze (%) | 78 | 75 | 97 |
| Hardness Shore D (points) | 38 | 41 | 38 |
| Izod impact resistance at -20 °C (J/m) | >50 | >50 | <20 |

Table 4

| Examples and comparative examples | 5 | 6 | 7 | 6c | 7c |
|---|---|---|---|---|---|
| cPP3 (EP2X30F) (wt. %) | 40 | 40 | 30 | 100 | 50 |
| aPP2 (wt%) | 20 | 30 | 20 | 0 | 50 |
| Exact 4033 (w%) | 40 | 30 | 50 | 0 | 0 |
| Haze (%) | 40 | 46 | 38 | 76 | 50 |
| Hardness Shore D (points) | 39 | 35 | 36 | 68 | 37 |
| Izod impact resistance at -20 °C (J/m) | - | 90 | - | <20 | <20 |

Table 5

| Examples and comparative examples | 6 | 7 | 8 | 9 |
|---|---|---|---|---|
| cPP3 (EP2X30F) (wt %) | 30 | 30 | 30 | 20 |
| aPP2 (w%) | 30 | 50 | 40 | 50 |
| Exact 4049 (w%) | 40 | 0 | 0 | 0 |
| Engage 8150 (w%) | 0 | 20 | 30 | 0 |
| Engage 8180 (w%) | 0 | 0 | 0 | 30 |
| Haze (%) | 35 | 33 | 33 | 29 |
| Hardness Shore D (points) | 28 | 23 | 27 | - |
| Hardness Shore A (points) | 89 | 84 | 88 | 74 |
| Izod impact resistance at -20 °C (J/m) | 120 | - | - | - |

## Claims

**1.** An elastomeric thermoplastic polyolefin composition comprising:

(I) a crystalline propylene polymer (cPP) containing at least 80% by weight, preferably 94% by weight, of a fraction insoluble in xylene at room temperature, the intrinsic viscosity being higher than 0.5 dL/g;
(II) an atactic or amorphous propylene polymer (aPP) having intrinsic viscosity higher than 0.5 dL/g; and
(III) an elastomeric olefin polymer (eOP) consisting of copolymers of ethylene with a comonomer selected from a $C_3$-$C_8$ $\alpha$-olefin, the intrinsic viscosity ranging from 1 to 4 dL/g;

in said polyolefin composition the density of the elastomeric olefin polymer ($d_{eOP}$) satisfies the following relation:

$$d_{eOP} \pm 0.005 = \{d_{cPP} \times [w_{cPP}/(w_{cPP} + w_{aPP})]\} + \{d_{aPP} \times [w_{aPP}/(w_{cPP} + w_{aPP})]\} \quad (1)$$

wherein $w_{cPP}$ and $w_{aPP}$ are the weight percentage content of components (I) and (II) respectively and $d_{cPP}$ and $d_{aPP}$ are the density at room temperature of components (I) and (II) respectively.

**2.** The composition of claim 1 comprising (based on the total amount (100 wt.%) of components (I) to (III):

(I) 1-55 wt.%, preferably 5-less than 40 wt.%, of the crystalline propylene polymer (cPP);
(II) 1-55 wt.% of the atactic or amorphous propylene polymer (aPP); and
(III) 1-55 wt.% of the elastomeric olefin polymer (eOP).

**3.** The composition of claims 1 or 2 wherein the crystalline propylene polymer is selected from an isotactic propylene hompolymer and random copolymer of propylene with recurring units deriving from ethylene and/or 1-butene.

**4.** The composition of claims 1-3 wherein the atactic or amorphous propylene polymer (aPP) is selected from a propylene homopolymer and a copolymer of propylene with recurring units deriving from ethylene and/or 1-butene.

**5.** The composition of claim 4 wherein the atactic or amorphous propylene polymer (aPP) has the following properties:

- the ratio of the pentads (mmmm)/(rrrr) equal to or greater than 1.5, preferably equal to or greater than 2.0; and
- the ratio of the pentads (mmmm)/(mmmr) equal to or greater than 0.8, preferably equal to or greater than 0.9, most preferably equal to or greater than 1.

**6.** The composition of claim 4 or 5 wherein the crystalline propylene polymer (cPP) is an isotactic propylene polymer.

**7.** The composition of claim 4 wherein the atactic or amorphous propylene polymer (aPP) has syndiotactic diads (r)

more numerous than the isotactic ones (m).

**8.** The composition of claim 7 wherein the crystalline propylene polymer is a syndiotactic propylene polymer.

**9.** The composition of claims 1-8 wherein the elastomeric copolymer is a copolymer of ethylene with 1-butene or 1-octene having from 20 to 40 wt% of comonomer.

**10.** A process for preparing the composition of claims 1-7 by blending the polymers (I)-(III) in the molten state.

**11.** Articles comprising the compositions of claims 1-7.

European Patent Office

# EUROPEAN SEARCH REPORT

Application Number
EP 01 11 7345

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,D | EP 0 666 284 A (SPHERILENE SRL) 9 August 1995 (1995-08-09) * abstract * * page 2, line 1 - line 2 * * page 2, line 26 - line 58 * * page 3, line 1 - line 24 * * page 3, line 35 - line 57 * * claims 1-5 * | 1-11 | C08L23/10 C08L23/16 //(C08L23/10, 23:16), (C08L23/16, 23:10) |
| Y,D | WO 00 01738 A (MOSCARDI GILBERTO ;SILVESTRI ROSANNA (IT); RESCONI LUIGI (IT); BAL) 13 January 2000 (2000-01-13) * abstract * * page 1, line 1 - line 10 * * page 15, line 15 - page 17, line 2 * * page 18 - page 20 * | 1-11 | |
| Y | EP 0 472 946 A (HIMONT INC) 4 March 1992 (1992-03-04) * abstract * * page 2, line 1-5 * * page 2, line 33 - line 35 * * page 2, line 44 - page 3, line 4 * * page 3, line 24 - line 26 * * example 4; table 1B * | 1-11 | TECHNICAL FIELDS SEARCHED (Int.Cl.7) C08L |

The present search report has been drawn up for all claims

| Place of search | Date of completion of the search | Examiner |
|---|---|---|
| THE HAGUE | 13 November 2001 | Droghetti, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 01 11 7345

This annex lists the patent family membersrelating to the patent documents cited in the above-mentioned European search report.
The members are as contained in the European Patent Office EDP file on
The European Patent Office is in no way liable for these particulars which are merely given for the purpose of information.

13-11-2001

| Patent document cited in search report | | Publication date | Patent family member(s) | | | Publication date |
|---|---|---|---|---|---|---|
| EP 0666284 | A | 09-08-1995 | IT | 1275404 | B1 | 05-08-1997 |
| | | | AT | 168401 | T | 15-08-1998 |
| | | | CA | 2141893 | A1 | 08-08-1995 |
| | | | CN | 1109898 | A | 11-10-1995 |
| | | | DE | 69503398 | D1 | 20-08-1998 |
| | | | DE | 69503398 | T2 | 18-02-1999 |
| | | | DK | 666284 | T3 | 02-11-1998 |
| | | | EP | 0666284 | A1 | 09-08-1995 |
| | | | ES | 2119238 | T3 | 01-10-1998 |
| | | | JP | 7268145 | A | 17-10-1995 |
| | | | RU | 2143445 | C1 | 27-12-1999 |
| WO 0001738 | A | 13-01-2000 | AU | 4904099 | A | 24-01-2000 |
| | | | CN | 1277618 | T | 20-12-2000 |
| | | | WO | 0001738 | A2 | 13-01-2000 |
| | | | EP | 1017729 | A2 | 12-07-2000 |
| | | | HU | 0100215 | A2 | 28-06-2001 |
| EP 0472946 | A | 04-03-1992 | IT | 1243188 | B | 24-05-1994 |
| | | | AT | 130320 | T | 15-12-1995 |
| | | | AU | 643810 | B2 | 25-11-1993 |
| | | | AU | 8140791 | A | 06-02-1992 |
| | | | BR | 9103295 | A | 26-05-1992 |
| | | | CA | 2048152 | A1 | 02-02-1992 |
| | | | CN | 1059537 | A ,B | 18-03-1992 |
| | | | CS | 9102393 | A3 | 19-02-1992 |
| | | | DE | 69114613 | D1 | 21-12-1995 |
| | | | DE | 69114613 | T2 | 30-05-1996 |
| | | | EP | 0472946 | A2 | 04-03-1992 |
| | | | ES | 2080863 | T3 | 16-02-1996 |
| | | | FI | 913681 | A | 02-02-1992 |
| | | | HU | 61784 | A2 | 01-03-1993 |
| | | | HU | 219765 | B | 30-07-2001 |
| | | | IL | 98936 | A | 31-01-1996 |
| | | | JP | 6025367 | A | 01-02-1994 |
| | | | KR | 217158 | B1 | 01-09-1999 |
| | | | MX | 9100433 | A1 | 01-04-1992 |
| | | | NO | 301023 | B1 | 01-09-1997 |
| | | | PL | 291297 | A1 | 01-06-1992 |
| | | | PT | 98541 | A ,B | 30-06-1992 |
| | | | SK | 280009 | B6 | 12-07-1999 |
| | | | RU | 2036942 | C1 | 09-06-1995 |
| | | | US | 5286564 | A | 15-02-1994 |
| | | | ZA | 9105782 | A | 29-04-1992 |

EPO FORM P0459

For more details about this annex : see Official Journal of the European Patent Office, No. 12/82